# EUROPÄISCHE PATENTSCHRIFT

(11) **EP 3 746 677 B1**
(45) Veröffentlichungstag und Bekanntmachung des Hinweises auf die Patenterteilung: **26.02.2025**
(21) Anmeldenummer: 18833234.0
(22) Anmeldetag: 21.12.2018
(51) Int. Cl.: F16F 13/10

(54) **HYDRAULISCH DÄMPFENDES LAGER**
HYDRAULIC DAMPING BEARING
PALIER AMORTISSEUR HYDRAULIQUE

(30) Priorität: 31.01.2018 DE 102018102130
(43) Veröffentlichungstag der Anmeldung: 09.12.2020
(73) Patentinhaber: Vibracoustic SE, 69469 Weinheim (DE)
(72) Erfinder: HOLZ, Roland, 64658 Fürth (DE); GÖLZ, Stefan, 69469 Weinheim (DE); JAMBOR, Robert, 68775 Ketsch (DE); HEILMANN, Tina, 68766 Hockenheim (DE)
(74) Vertreter: Patentanwälte Olbricht Buchhold Keulertz
(86) Internationale Anmeldenummer: PCT/EP2018/086549
(87) Internationale Veröffentlichungsnummer: WO 2019/149431

(56) Entgegenhaltungen:
- EP-A1- 2 180 207
- EP-A1- 3 045 766
- EP-A2- 2 428 698
- EP-B1- 2 180 207
- WO-A1-2006/011231
- US-A- 4 925 162
- US-A1- 2019 017 567

## Beschreibung

Die vorliegende Erfindung betrifft ein hydraulisch dämpfendes Lager zur Lagerung eines Kraftfahrzeugaggregats an einer Kraftfahrzeugkarosserie, aufweisend ein Auflager und ein Traglager, die durch eine Tragfeder aus einem elastomeren Material miteinander verbunden sind, wobei die Tragfeder eine Arbeitskammer begrenzt, die durch eine Trennvorrichtung von einer Ausgleichskammer getrennt ist, wobei die Arbeitskammer und die Ausgleichskammer mit einem Fluid gefüllt und über einen in die Trennvorrichtung eingebrachten Dämpfungskanal miteinander verbunden sind.

Ein hydraulisch dämpfendes Lager der eingangs genannten Art wird auch als Hydrolager bezeichnet und dient zur Abstützung eines Kraftfahrzeugmotors oder eines Getriebes an einer Kraftfahrzeugkarosserie, um die von den Fahrbahnunebenheiten hervorgerufenen Schwingungen zu dämpfen und akustische Schwingungen zu isolieren.

Die Dämpfung der vom Kraftfahrzeugaggregat eingeleiteten Schwingungen mit großer Amplitude und kleiner Frequenz erfolgt über ein hydraulisches System, das aus der mit Fluid gefüllten Arbeitskammer, der mit Fluid gefüllten Ausgleichskammer und dem Dämpfungskanal gebildet ist. Die eingeleiteten Schwingungen führen zu einer Bewegung der Tragfeder, wodurch ein hydraulischer Druck innerhalb der Arbeitskammer aufgebaut wird. Infolge dieses Drucks strömt das Fluid von der Arbeitskammer über den Dämpfungskanal in die Ausgleichskammer. Durch den geringen Durchmesser des Dämpfungskanals und der damit verbundenen hohen mechanischen Übersetzung, die sich aus dem äquivalenten, verdrängten Querschnitt der Tragfeder in Relation zu dem Dämpfungskanalquerschnitt ergibt, werden die eingeleiteten Schwingungen gedämpft beziehungsweise getilgt.

Die Dämpfung hochfrequenter, kleinamplitudiger Schwingungen, das heißt im akustisch relevanten Bereich, erfolgt über eine zwischen zwei Düsenscheiben angeordnete Membran. Die Membran schwingt bei hochfrequenten, kleinamplitudigen Schwingungen und entkoppelt so die Dämpfung über den Dämpfungskanal. Dadurch wird eine Erhöhung der dynamischen Steifigkeit des Lagers verringert. Aus DE 198 01 277 C2 geht ein hydraulisch dämpfendes Lager mit einer Membran hervor, die einen Hohlraum aufweist, der durch eine Wand aus elastischem Material begrenzt ist, wobei in dem Hohlraum eine das Zusammenfallen des Hohlraums hemmende Distanzeinrichtung vorgesehen ist. Das Dokument US 49 25 162A zeigt alle Merkmale des Oberbegriffs des beigefügten Anspruchs 1.

Der vorliegenden Erfindung liegt die Aufgabe zugrunde, ein hydraulisch dämpfendes Lager zu schaffen, das im akustisch relevanten Bereich eine verbesserte Entkopplung der Schwingungen aufweist.

Zur Lösung der Aufgabe wird ein hydraulisch dämpfendes Lager mit den Merkmalen des Anspruchs 1 vorgeschlagen.

Vorteilhafte Ausgestaltungen des hydraulisch dämpfenden Lagers sind Gegenstand der abhängigen Ansprüche.

Das erfindungsgemäße hydraulisch dämpfende Lager zur Lagerung eines Kraftfahrzeugaggregats an einer Kraftfahrzeugkarosserie weist ein Auflager und ein Traglagerauf, die durch eine Tragfeder aus einem elastomeren Material miteinander verbunden sind, wobei die Tragfeder eine Arbeitskammer begrenzt, die durch eine Trennvorrichtung von einer Ausgleichskammer getrennt ist, wobei die Arbeitskammer und die Ausgleichskammer mit einem Fluid gefüllt und über einen in die Trennvorrichtung eingebrachten Dämpfungs-kanal miteinander verbunden sind, wobei die Trennvorrichtung zwei Düsenscheiben aufweist, zwischen denen eine erste Membran und eine zweite Membran angeordnet sind, und wobei eine der Membranen wenigstens ein Durchgangsloch aufweist.

Die beiden Membranen senken zusammen mit dem wenigstens einen Durchgangsloch den Verlustwinkel und die dynamische Steifigkeit des hydraulisch dämpfenden Lagers bei hochfrequenten, kleinamplitudigen Schwingungen.

Dadurch weist das hydraulisch dämpfende Lager im akustisch relevanten Bereich eine verbesserte Entkopplung auf. Über das Durchgangsloch kann das Fluid diejenige Membran, die kein Durchgangsloch aufweist, unmittelbar anströmen. Die beiden Membranen sind bevorzugt übereinanderliegend angeordnet. Insbesondere fluchtet das Durchgangsloch mit einer in die Düsenscheibe eingebrachten Öffnung oder Durchströmöffnung, die der Arbeitskammer zugewandt ist. Unter einem Durchgangsloch wird im Sinne der Erfindung ein Loch verstanden, das die Membran vollständig durchdringt.

In einer vorteilhaften Ausgestaltung weist die Membran eine Vielzahl an Durchgangslöchern auf. Über die Anzahl der Durchgangslöcher kann die Funktion, also die Verminderung des Verlustwinkels sowie der dynamischen Steifigkeit des Lagers eingestellt werden.

In einer vorteilhaften Ausgestaltung sind die Durchgangslöcher gleichmäßig und/oder ungleichmäßig zueinander beabstandet. Beispielsweise können eine erste Gruppe von Durchgangslöchern gleichmäßig zueinander beabstandet sein, wohingegen eine zweite Gruppe von Durchgangslöchern ungleichmäßig zueinander beabstandet sind. Ferner können eine erste Gruppe von Durchgangslöchern gleichmäßig zueinander und eine zweite Gruppe von Durchgangslöchern können ebenfalls gleichmäßig zueinander beabstandet sein, wobei die ersten Gruppe von Durchgangslöchern ungleichmäßig oder gleichmäßig zu der zweiten Gruppe von Durchgangslöchern beabstandet sind.

In einer vorteilhaften Ausgestaltung bilden die Durchgangslöcher einen Lochkreis. Insbesondere sind die Durchgangslöcher als Lochkreis um eine in die Membran eingebrachte Durchgangsöffnung angeordnet. Ferner können eine erste Gruppe von Durchgangslöchern einen ersten Lochkreis und eine zweite Gruppe von Durchgangslöchern können einen zweiten Lochkreis bilden.

In einer vorteilhaften Ausgestaltung weist die der Arbeitskammer zugewandte Membran das wenigstens eine Durchgangsloch auf. Dadurch wird die andere Membran unmittelbar von dem in der Arbeitskammer befindlichen Fluid und dem in der Ausgleichskammer befindlichen Fluid angeströmt und in Schwingung versetzt. Insbesondere fluchtet das Durchgangslochung mit einer in die Düsenscheibe eingebrachten Öffnung oder Durchströmöffnung

In einer vorteilhaften Ausgestaltung ist das Durchgangsloch im Querschnitt rund, rechteckförmig oder polygonförmig.

In einer vorteilhaften Ausgestaltung weist wenigstens eine der Membranen eine strukturierte Oberfläche auf. Über die strukturierte Oberfläche kann der Verlustwinkel sowie die dynamische Steifigkeit des Lagers eingestellt werden. Insbesondere ist die strukturierte Oberfläche als Schuhsohlenprofil und/oder Wellenprofil ausgebildet. Bevorzugt weisen beide Membranen eine strukturierte Oberfläche auf.

In einer vorteilhaften Ausgestaltung sind die Membranen lose oder geklemmt zwischen den beiden Düsenscheiben aufgenommen. Die Membranen können an ihren Außenrändern und/oder an ihren Innenrändern von den Düsenscheiben geklemmt sein. Ferner können die Membranen vollflächig zwischen den beiden Düsenscheiben geklemmt sein. Darüber hinaus können die Membran zwischen den geklemmten Außenrändern und/oder Innenrändern abschnittsweise zwischen den Düsenscheiben geklemmt sein.

In einer vorteilhaften Ausgestaltung sind die Membranen aus einem elastischen Material. Bevorzugt sind die Membranen aus einem Elastomer.

In einer vorteilhaften Ausgestaltung ist in die Trennvorrichtung ein Tilgerkanal eingebracht ist, der mittels eines Aktuators freigebbar und verschließbar ist. Der Tilgerkanal verbindet die Arbeitskammer mit der Ausgleichskammer. Wenn der Tilgerkanal geöffnet ist, kann im Tilgerkanal eine Fluidsäule schwingen, welche die dynamische Federrate des hydraulisch dämpfenden Lagers absenkt. Der Aktuator kann als eine Schaltvorrichtung ausgebildet sein, die elektrisch oder pneumatisch schaltbar ist.

Im Folgenden werden ein hydraulisch dämpfendes Lager sowie weitere Merkmale und Vorteile anhand eines Ausführungsbeispiels näher erläutert, das in den Figuren schematisch dargestellt ist. Hierbei zeigt:
- Fig. 1: einen Vertikalschnitt durch ein hydraulisch dämpfendes Lager; und
- Fig. 2: eine Draufsicht auf eine Membran mit Durchgangslöcher.

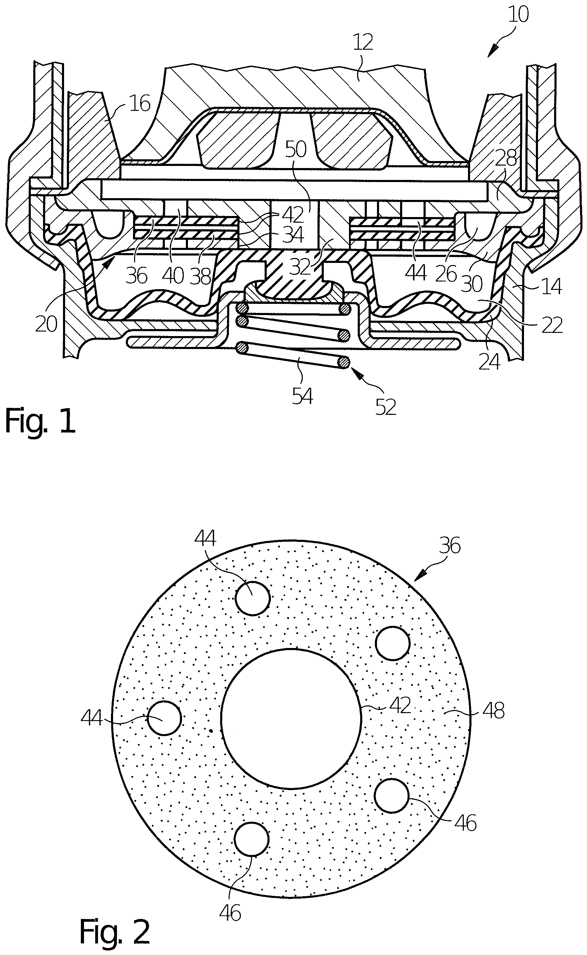

In Fig. 1 ist ein hydraulisch dämpfendes Lager 10 gezeigt, das zur Lagerung eines nicht dargestellten Kraftfahrzeugaggregats, wie beispielsweise eines Kraftfahrzeugmotors oder eines Getriebes, an einer nicht dargestellten Kraftfahrzeugkarosserie dient.

Das hydraulisch dämpfende Lager 10 weist ein Traglager 12 und ein Auflager 14 auf, die über eine Tragfeder 16 aus einem elastomeren Werkstoff miteinander verbunden sind. In das Traglager 12 ist eine nicht dargestellte Befestigungseinrichtung, zumeist in Form eines Bolzens, eingebracht, mittels der das hydraulisch dämpfende Lager 10 an einem nicht dargestellten Kraftfahrzeugaggregat befestigbar ist.

Die auf das hydraulisch dämpfende Lager 10 wirkenden statischen Lasten werden über die Tragfeder 16 aufgenommen. Gleichzeitig bewirkt die Tragfeder eine akustische Isolierung.

Das Traglager 12, das Auflager 14 und die Tragfeder 16 begrenzen eine Arbeitskammer 18, die durch eine Trennvorrichtung 20 von einer Ausgleichskammer 22 getrennt ist. Die Ausgleichskammer 22 ist durch eine Ausgleichsmembran 24 nach außen hin begrenzt. Die Arbeitskammer 18 und die Ausgleichskammer 22 sind mit einem Fluid gefüllt und über einen in die Trennvorrichtung 20 eingebrachten Dämpfungskanal 26 flüssigkeitsleitend miteinander verbunden.

Die Arbeitskammer 18, die Ausgleichskammer 22 und der Dämpfungskanal 26 bilden ein hydraulisches System, das die durch das Kraftfahrzeugaggregat eingeleiteten niederfrequenten Schwingungen mit großen Amplituden dämpft beziehungsweise tilgt. Die eingeleiteten Schwingungen führen zu einer Bewegung der Tragfeder 16, wodurch ein hydraulischer Druck innerhalb der Arbeitskammer 18 aufgebaut wird. Infolge des Drucks strömt das Fluid von der Arbeitskammer 18 über den Dämpfungskanal 26 in die Ausgleichskammer 22. Durch den geringen Durchmesser des Dämpfungskanals 26 und der damit verbundenen hohen mechanischen Übersetzung, die sich aus dem äquivalenten, verdrängten Querschnitt der Tragfeder 16 in Relation zu dem Dämpfungskanalquerschnitt ergibt, werden die eingeleiteten Schwingungen gedämpft beziehungsweise getilgt.

Wie in Fig. 1 ersichtlich ist, weist die Trennvorrichtung 20 eine erste Düsenscheibe 28 und eine zweite Düsenscheibe 30 auf. Die erste Düsenscheibe 28 ist der Arbeitskammer 18 zugeordnet, und die zweite Düsenscheibe 30 ist der Ausgleichskammer 22 zugeordnet. Die erste Düsenscheibe 28 weist einen zylindrischen Vorsprung 32 auf, der in eine Öffnung 34 der zweiten Düsenscheibe 30 eingreift.

Zwischen den beiden Düsenscheiben 28, 30 sind eine erste Membran 36 und eine zweite Membran 38 aus einem elastomeren Werkstoff angeordnet. Die Membranen werden über in die Düsenscheiben 28, 30 eingebrachte Durchströmöffnungen 40 von dem in der Arbeitskammer 18 und der Ausgleichskammer 22 befindlichen Fluid angeströmt werden.

Die Membranen 36, 38 sind lose zwischen den beiden Düsenscheiben 28, 30 aufgenommen und dienen zur Entkopplung hochfrequenter, kleinamplitudiger Schwingungen, das heißt im akustische relevanten Bereich, in dem die Membran 32 bei hochfrequenten kleinamplitudigen Schwingungen schwingt, wodurch eine Dämpfung über den Dämpfungskanal 26 entkoppelt wird.

Wie in Fig. 1 ersichtlich ist, weist jede der Membranen 36, 38 eine Durchgangsöffnung 42 auf, durch welche sich der zylindrische Vorsprung 32 der ersten Düsenscheibe 28 hindurch erstreckt.

Wie in den Figuren 1 und 2 zudem ersichtlich ist, weist die erste Membran 36 mehrere Durchgangslöcher 44 auf, die um die Durchgangsöffnung 42 angeordnet sind und einen Lochkreis 46 bilden. Die Durchgangslöcher 44 fluchten mit den Durchströmöffnungen 40 der ersten Düsenscheibe 28 und sind der Arbeitskammer 18 zugewandt. Dadurch wird die zweite Membran 38 unmittelbar von dem in der Arbeitskammer 18 und dem in der Ausgleichskammer 2 befindlichen Fluid angeströmt.

Aufgrund der beiden übereinanderliegenden Membranen 36, 38 sowie den in die erste Membran 36 eingebrachten Durchgangslöcher 40 kann der Verlustwinkel sowie die dynamische Steifigkeit des hydraulisch dämpfenden Lagers 10 gemindert werden.

Die Membranen 36, 38 weisen zudem eine strukturierte Oberfläche 48 auf, wie dies in Fig. 2 ersichtlich ist. Die strukturierte Oberfläche 48 ist näherungsweise einem Schuhsohlenprofil nachempfunden und bewirkt eine Reduzierung des Verlustwinkels sowie der dynamischen Steifigkeit des hydraulisch dämpfenden Lagers 10.

Wie zudem in Fig. 1 ersichtlich ist, ist in die Trennvorrichtung 20 ein Tilgerkanal 50 eingebracht, der auch als Leerlaufkanal bezeichnet werden kann, und der mittels eines als Schaltvorrichtung 52 ausgebildeten Aktuators freigebbar und verschließbar ist.

Der Tilgerkanal 50 reduziert in der Offenstellung die dynamische Lagersteifigkeit im Motorleeerlauf. In der Offenstellung kann die innerhalb des Tilgerkanals 50 befindliche Flüssigkeitssäule schwingen, so dass die im Motorleerlauf auftretenden hochfrequenten Motorschwingungen aufgrund der kleinen wirksamen Federrate in deutlich gemilderter Form auf eine nicht dargestellte Kraftfahrzeugkarosserie übertragen werden.

Wenn der Tilgerkanal 50 geschlossen ist, arbeitet das hydraulisch dämpfende Lager 10 wie ein herkömmliches Lager, indem niederfrequente Schwingungen mit großer Amplitude durch eine Flüssigkeitsverschiebung innerhalb des Dämpfungskanals 26 gedämpft und hochfrequente Schwingungen mit kleiner Amplitude mit Hilfe der Membran 36 isoliert beziehungsweise entkoppelt werden.

Die Schaltvorrichtung 52 weist ein Federelement 54 auf, das mit der Ausgleichsmembran 24 verbunden ist. Das Federelement 54 drängt die Ausgleichsmembran 24 gegen die Trennvorrichtung 20, um den Tilgerkanal 50 zu schließen. Zum Öffnen des Tilgerkanals 50 ist die Schaltvorrichtung 52 über einen nicht dargestellten Anschluss mit einer nicht dargestellten Unterdruckquelle verbunden, wobei durch Anlegen eines Unterdrucks die Ausgleichsmembran 24 gegen die Kraft des Federelements 54 von der Trennvorrichtung 20 weg bewegt wird, um den Tilgerkanal 50 zu öffnen.

### Bezugszeichenliste

- 10: hydraulisch dämpfendes Lager
- 12: Traglager
- 14: Auflager
- 16: Tragfeder
- 18: Arbeitskammer
- 20: Trennvorrichtung
- 22: Ausgleichskammer
- 24: Ausgleichsmembran
- 26: Dämpfungskanal
- 28: erste Düsenscheibe
- 30: zweite Düsenscheibe
- 32: zylindrischer Vorsprung
- 34: Öffnung
- 36: erste Membran
- 38: zweite Membran
- 40: Durchströmöffnung
- 42: Durchgangsöffnung
- 44: Durchgangsloch
- 46: Lochkreis
- 48: strukturierte Oberfläche
- 50: Tilgerkanal
- 52: Schaltvorrichtung
- 54: Federelement

## Patentansprüche

1. Hydraulisch dämpfendes Lager (10) zur Lagerung eines Kraftfahrzeugaggregats an einer Kraftfahrzeugkarosserie, aufweisend ein Auflager (14) und ein Traglager (12), die durch eine Tragfeder (16) aus einem elastomeren Material miteinander verbunden sind, wobei die Tragfeder (16) eine Arbeitskammer (18) begrenzt, die durch eine Trennvorrichtung (20) von einer Ausgleichskammer (22) getrennt ist, wobei die Arbeitskammer (18) und die Ausgleichskammer (22) mit einem Fluid gefüllt und über einen in die Trennvorrichtung (20) eingebrachten Dämpfungskanal (26) miteinander verbunden sind, wobei die Trennvorrichtung (20) zwei Düsenscheiben (28, 30) aufweist, zwischen denen eine erste Membran (36) und eine zweite Membran (38) angeordnet sind, und wobei eine der Membranen (36, 38) wenigstens ein Durchgangsloch (44) aufweist, **dadurch gekennzeichnet, dass** die jeweils andere Membran (36,38) kein Durchgangsloch (44) aufweist.

2. Hydraulisch dämpfendes Lager (10) nach Anspruch 1, **dadurch gekennzeichnet, dass** die Membran (36, 38) eine Vielzahl an Durchgangslöchern (44) aufweist.

3. Hydraulisch dämpfendes Lager (10) nach Anspruch 2, **dadurch gekennzeichnet, dass** die Durchgangslöcher (44) gleichmäßig und/oder ungleichmäßig zueinander beabstandet sind.

4. Hydraulisch dämpfendes Lager (10) nach Anspruch 2 oder 3, **dadurch gekennzeichnet, dass** die Durchgangslöcher (44) einen Lochkreis (46) bilden.

5. Hydraulisch dämpfendes Lager (10) nach einem der vorhergehenden Ansprüche, **dadurch gekennzeichnet, dass** die der Arbeitskammer (18) zugewandte Membran (36, 38) das wenigstens eine Durchgangsloch (44) aufweist.

6. Hydraulisch dämpfendes Lager (10) nach einem der vorhergehenden Ansprüche, **dadurch gekennzeichnet, dass** das Durchgangsloch (44) im Querschnitt rund, rechteckförmig oder polygonförmig ist.

7. Hydraulisch dämpfendes Lager (10) nach einem der vorhergehenden Ansprüche, **dadurch gekennzeichnet, dass** wenigstens eine der Membranen (36, 38) eine strukturierte Oberfläche aufweist.

8. Hydraulisch dämpfendes Lager (10) nach einem der vorhergehenden Ansprüchen, **dadurch gekennzeichnet, dass** die beiden Membran (36, 38) lose und/oder geklemmt zwischen den beiden Düsenscheiben aufgenommen sind.

9. Hydraulisch dämpfendes Lager (10) nach einem der vorhergehenden Ansprüche, **dadurch gekennzeichnet, dass** die Membranen (36, 38) aus einem elastischen Material sind.

10. Hydraulisch dämpfendes Lager (10) nach einem der vorergehenden Ansprüche, **dadurch gekennzeichnet, dass** in die Trennvorrichtung (20) ein Tilgerkanal (50) eingebracht ist, der mittels eines Aktuators freigebbar und verschließbar ist.

## Claims

1. Hydraulically damping bearing (10) for mounting a motor vehicle unit on a motor vehicle body, having a support (14) and a supporting bearing (12) which are connected to one another by a supporting spring (16) made of an elastomeric material, the supporting spring (16) delimiting a working chamber (18) which is separated from an equalising chamber (22) by a separating device (20), the working chamber (18) and the equalising chamber (22) being filled with a fluid and being connected to one another via a damping channel (26) introduced into the separating device (20), the separating device (20) having two nozzle discs (28, 30), between which a first diaphragm (36) and a second diaphragm (38) are arranged, and one of the diaphragms (36, 38) having at least one through-hole (44), **characterised in that** the respective other diaphragm (36, 38) does not have a through-hole (44).

2. Hydraulically damping bearing (10) according to claim 1, **characterised in that** the diaphragm (36, 38) has a plurality of through-holes (44).

3. Hydraulically damping bearing (10) according to claim 2, **characterised in that** the through-holes (44) are evenly and/or unevenly spaced apart.

4. Hydraulically damping bearing (10) according to claim 2 or 3, **characterised in that** the through-holes (44) form a bolt circle (46).

5. Hydraulically damping bearing (10) according to one of the preceding claims, **characterised in that** the diaphragm (36, 38) facing the working chamber (18) has the at least one through-hole (44).

6. Hydraulically damping bearing (10) according to one of the preceding claims, **characterised in that** the through-hole (44) is round, rectangular or polygon-shaped in cross-section.

7. Hydraulically damping bearing (10) according to one of the preceding claims, **characterised in that** at least one of the diaphragms (36, 38) has a structured surface.

8. Hydraulically damping bearing (10) according to one of the preceding claims, **characterised in that** the two diaphragms (36, 38) are held loosely and/or clamped between the two nozzle discs.

9. Hydraulically damping bearing (10) according to one of the preceding claims, **characterised in that** the diaphragms (36, 38) are made of an elastic material.

10. Hydraulically damping bearing (10) according to one of the preceding claims, **characterised in that** an absorber channel (50) is introduced into the separating device (20), which can be opened and closed by means of an actuator.

## Revendications

1. Support à amortissement hydraulique (10) pour le montage d'un ensemble de véhicule automobile sur une carrosserie de véhicule automobile, présentant un appui (14) et un support (12) qui sont reliés l'un à l'autre par un ressort porteur (16) en un matériau élastomère, le ressort porteur (16) délimitant une chambre de travail (18) qui est séparée d'une chambre de compensation (22) par un dispositif de séparation (20), la chambre de travail (18) et la chambre de compensation (22) étant remplies d'un fluide et reliées entre elles par un canal d'amortissement (26) ménagé dans le dispositif de séparation (20), le dispositif de séparation (20) présentant deux disques à buses (28, 30) entre lesquels sont disposées une première membrane (36) et une deuxième membrane (38), et l'une des membranes (36, 38) présentant au moins un trou de passage (44), **caractérisé en ce que** l'autre membrane respective (36, 38) ne présente aucun trou de passage (44).

2. Support à amortissement hydraulique (10) selon la revendication 1, **caractérisé en ce que** la membrane (36, 38) comporte une pluralité de trous de passage (44).

3. Support à amortissement hydraulique (10) selon la revendication 2, **caractérisé en ce que** les trous de passage (44) sont espacés de manière uniforme et/ou non uniforme.

4. Support à amortissement hydraulique (10) selon la revendication 2 ou 3, **caractérisé en ce que** les trous de passage (44) forment un cercle de trous (46).

5. Support à amortissement hydraulique (10) selon l'une des revendications précédentes, **caractérisé en ce que** la membrane (36, 38) tournée vers la chambre de travail (18) présente ledit au moins un trou de passage (44).

6. Support à amortissement hydraulique (10) selon l'une des revendications précédentes, **caractérisé en ce que** le trou de passage (44) est de section circulaire, rectangulaire ou polygonale.

7. Support à amortissement hydraulique (10) selon l'une des revendications précédentes, **caractérisé en ce qu'**au moins l'une des membranes (36, 38) présente une surface structurée.

8. Support à amortissement hydraulique (10) selon l'une des revendications précédentes, **caractérisé en ce que** les deux membranes (36, 38) sont logées de manière lâche et/ou serrée entre les deux disques de buses.

9. Support à amortissement hydraulique (10) selon l'une des revendications précédentes, **caractérisé en ce que** les membranes (36, 38) sont en un matériau élastique.

10. Support à amortissement hydraulique (10) selon l'une des revendications précédentes, **caractérisé en ce qu'**un canal d'amortissement (50) est ménagé dans le dispositif de séparation (20), lequel peut être libéré et fermé au moyen d'un actionneur.
